# EUROPÄISCHE PATENTSCHRIFT

(11) **EP 3 449 231 B1**
(45) Veröffentlichungstag und Bekanntmachung des Hinweises auf die Patenterteilung: **26.08.2020**
(21) Anmeldenummer: 17718521.2
(22) Anmeldetag: 20.04.2017
(51) Int. Cl.: G01M 11/06

(54) **VERFAHREN ZUR AUSRICHTUNG EINES SCHEINWERFEREINSTELLGERÄTES**
METHOD FOR ALIGNING A HEADLIGHT ADJUSTMENT DEVICE
PROCÉDÉ POUR ORIENTER UN APPAREIL DE RÉGLAGE DE PHARE

(30) Priorität: 26.04.2016 DE 102016207047
(43) Veröffentlichungstag der Anmeldung: 06.03.2019
(73) Patentinhaber: Beissbarth GmbH, 80993 München (DE)
(72) Erfinder: MAKRA, Imre, 80995 Muenchen (DE); BAUMGARTNER, Andreas, 81735 Muenchen (DE)
(74) Vertreter: Schmitt-Nilson Schraud Waibel Wohlfrom Patentanwälte Partnerschaft mbB
(86) Internationale Anmeldenummer: PCT/EP2017/059341
(87) Internationale Veröffentlichungsnummer: WO 2017/186553

(56) Entgegenhaltungen:
- EP-A2- 1 016 873
- DE-A1- 19 707 590
- JP-A- H08 122 622

## Beschreibung

### Stand der Technik

Die Erfindung bezieht sich auf ein Verfahren zur Ausrichtung eines Scheinwerfereinstellgerätes.

Aus der EP 1 016 873 A2 ist eine Einstellvorrichtung zum Justieren eines an einem Fahrzeug montierten Abstandsmessers oder Scheinwerfers bekannt. Die Einstellvorrichtung zum Justieren eines am Fahrzeug montierten Abstandssensors oder Scheinwerfers hat ein Einstellgerät, das an einem quer zur Fahrrichtung des Fahrzeugs bewegbaren Tragegestell angebracht ist und bezüglich des Tragegestells einen zumindest in horizontaler Richtung verschwenkbaren, planaren Reflektor aufweist. Eine genaue und einfache Justierung des Abstandssensors bzw. Scheinwerfers wird dadurch erzielt, dass zum Ermitteln der Fahrachse des Fahrzeugs eine Bestimmungsvorrichtung vorgesehen ist, die eine an den beiden gegenüberliegenden ungelenkten Rädern einer Radachse anbringbare Lichtprojektionseinrichtung aufweist, welche in Spurrichtung jedes der beiden Räder einen Lichtstrahl auf den in dessen Strahlengang gebrachten Reflektor abgibt, wozu das Tragegestell entlang eines Führungsmittels geradlinig quer zur Fahrtrichtung bewegbar ist, dass der Reflektor horizontal in beiden Richtungen aus der Richtung quer zur Fahrrichtung soweit verschwenkbar ist, dass der Lichtstrahl senkrecht auf den Reflektor auftrifft, dass das Einstellgerät eine Anzeigeeinheit aufweist, mit der horizontale Schwenkwinkel des Reflektors ablesbar sind, dass die Fahrachse als Mittelwert der beiden den jeweiligen Sperrichtungen entsprechenden Schwenkwinkel senkrecht zur Fahrachse einstellbar und durch geradlinige Bewegung entlang des Führungsmittels in den Abstrahlungsbereich des Abstandssensors oder des Scheinwerfers zu dessen Justierung bringbar ist.

DE 19 707 590 A1 offenbart ein Verfahren zum Justieren der Ausrichtung einer Strahlcharakteristik eines Entfernungssensors, insbesondere eines Abstandsradars, der in oder an einem Kraftfahrzeugmontiert ist. Das Verfahren umfasst die folgenden Schritte: Positionieren des Kraftfahrzeugs und/oder einesZielobjektes, welches als Referenzziel für denEntfernungssensor geeignet ist, mit Hilfe einer Positioniervorrichtung, so daß eine Normalenrichtung des Zielobjektes in einem bekannten Winkel zu einer gewählten Referenzachse oder Referenzlinie des Kraftfahrzeugssteht; Verwenden oder Inbetriebnehmen einer Serviceeinheit, mit der Meß- oder Datenwerte des Entfernungssensors auslesbar und Verstell- bzw. Justierrichtungen anzeigbar sind; Inbetriebnehmen des Entfernungssensors, Verstellen der Ausrichtung der Strahlcharakteristik des Entfernungssensors in jeweils diejenige Richtung, die von der Serviceeinheit angezeigt wird, wobei diese Richtung anhand der Meß- oder Datenwerte des Entfernungssensors sowie anhand mindestens eines vorgegebenen Auswertekriteriums bestimmt wird.

JP H08 122 622 A beschreibt einen Spiegelhaltemechanismus mit Spiegelhalteteilen, die einen Spiegel an drei Punkten halten. Von den Spiegelhalteteilen ist ein Spiegelhalteteil am oberen Randteil einer Öffnung mit einem exzentrischen Nockenmechanismus versehen, der durch den Drehvorgang eines Treibers angetrieben wird. Der Spiegelhaltepunkt des Spiegelhalteteils wird so gegenüber dem Spiegelrahmen hin und her bewegt, um den Spiegel auszurichten.

### Offenbarung der Erfindung

### Vorteile der Erfindung

Das erfindungsgemäße Verfahren zur Ausrichtung eines Scheinwerfereinstellgerätes mit den Merkmalen des unabhängigen Patentanspruchs 1 hat den Vorteil, dass eine besonders genaue Ausrichtung des Scheinwerfereinstellgerätes zur Fahrachse des Fahrzeuges ermöglicht wird. Durch die exakte Ausrichtung des Scheinwerfereinstellgerätes zur Fahrachse können Messungen zur Justierung des Scheinwerfers am Fahrzeug mit erhöhter Genauigkeit vorgenommen werden.

Durch den Aufsatz kann das Scheinwerfereinstellgerät zu einer Einstellvorrich- tung zur Ausrichtung eines Scheinwerfereinstellgerätes umfunktioniert werden. Dies ist besonders vorteilhaft, da die Ausrichtung des Reflektors oder der reflektierenden Fläche des Aufsatzes gleichzeitig eine Ausrichtung des Scheinwerfereinstellgerätes beinhaltet. Es können weniger Fehler oder Ungenauigkeiten entstehen.

In den abhängigen Ansprüchen sind vorteilhafte Ausgestaltungen und Weiterbildungendes erfindungsgemäßen Verfahrens angegeben.

Es ist von Vorteil, wenn die erste Hauptseitenfläche einen Rahmen umfasst, welcher die reflektierende Oberfläche umschließt, da der Rahmen die reflektierende Oberfläche schützt, indem sie nicht bis zu den Kanten reicht.

Vorteilhaft aufgrund der geringen Kosten und des hohen Reflexionsvermögens ist ein Spiegel als reflektierende Oberfläche.

Der Aufsatz ist auf das Gehäuse des Lichtsammeikastens aufsteckbar, so dass das Gehäuse des Lichtsammeikastens durch die zweite, dritte, vierte und fünfte Hauptseitenfläche, die einen rechtwinkligen Querschnitt bilden, zumindest teilweise umschlossen und die reflektierende Fläche parallel zur einer Lichtsammelfläche des Lichtsammelkastens ausgerichtet ist.

Durch Bereiche von mindestens zwei Hauptseitenflächen, die mit dem Lichtsammelkasten formschlüssig sind, kann ein korrekter Sitz des Aufsatzes auf den Lichtsammelkasten, insbesondere eine parallele Ausrichtung der reflektierenden Fläche zur Lichtsammelfläche sichergestellt werden.

Vorteilhaft ist eine lösbare Verbindung, die die reflektierende Oberfläche mit dem Rahmen, insbesondere durch Schrauben, verbindet, da eine beschädigte reflektierende Oberfläche ausgetauscht werden kann.

Der Aufsatz wird auf den Lichtsammelkasten aufgesteckt, so dass durch mindestens zwei gegenüberliegende Hauptseitenflächen, die eine Kraft auf das Gehäuse des Lichtsammelkastens ausüben, ein sicherer Halt des Aufsatzes auf den Lichtsammelkasten ermöglicht wird.

Eine Sichtöffnung im Rahmen ist von Vorteil, da ein Benutzer mit Hilfe der Sichtöffnung den korrekten Sitzt des Aufsatzes auf den Lichtsammelkasten überprüfen kann. Hierbei ermöglicht eine langestreckte Sichtöffnung eine besonders gute Kontrolle, ob die reflektierende Fläche parallel zur Lichtsammelfläche ausgerichtet ist.

Bevorzugte Ausführungsbeispiele der Erfindung sind in der Zeichnung dargestellt und in der nachfolgenden Beschreibung näher erläutert.

Es zeigen:
Figur 1 einen Aufsatz für ein Scheinwerfereinstellgerät aus einer ersten perspektivischen Ansicht,
Figur 2 einen Aufsatz für ein Scheinwerfereinstellgerät aus einer zweiten perspektivischen Ansicht,
Figur 3 einen Aufsatz für ein Scheinwerfereinstellgerät aus einer dritten perspektivischen Ansicht,
Figur 4 einen Einstellvorrichtung zur Ausrichtung eines Scheinwerfereinstellgerätes und
Figur 5 eine schematische Darstellung zur Justierung eines Scheinwerfers in Draufsicht.

### Ausführungsformen der Erfindung

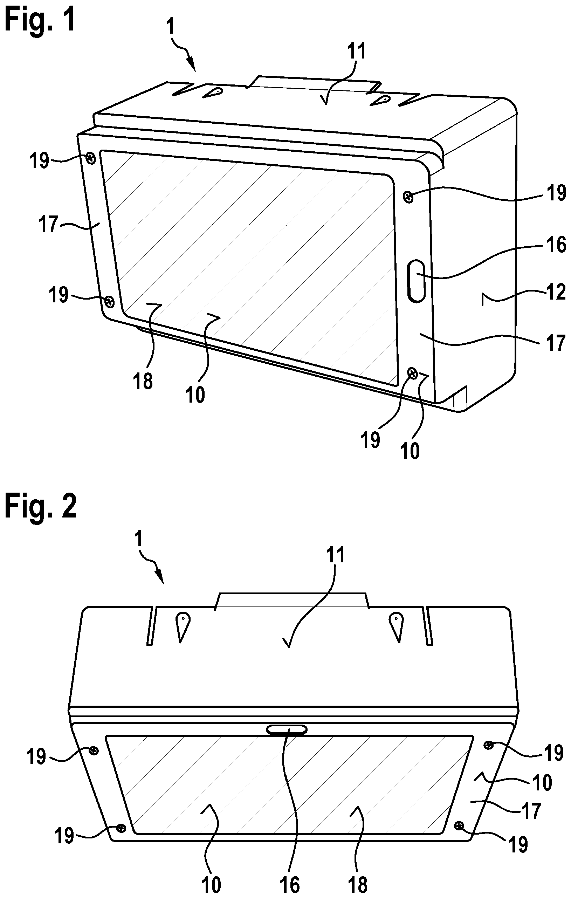

Die Figur 1 zeigt einen Aufsatz 1 für ein Scheinwerfereinstellgerät 20. Der Aufsatz 1 hat fünf rechtwinklig zueinander angeordnete Hauptseitenflächen 10, 11, 12, 13, 14. Die Hauptseitenflächen 10, 11, 12, 13, 14 sind an den Kanten so miteinander verbunden sind, dass sie eine Schale bilden, die an einer Seite eine Öffnung aufweist. Die erste Hauptseitenfläche 10 befindet sich gegenüber der Öffnung und weist eine reflektierende Oberfläche 18 auf.

In den Darstellungen gemäß Figur 1, 2 und 3 ist die zweite Hauptseitenfläche 11 oben, die dritte Hauptseitenfläche 12 rechts, die vierte Hauptseitenfläche 13 unten und die fünfte Hauptseitenfläche 14 links angeordnet, wenn die Öffnung vom Betrachter abgewandt ist.

Die erste Hauptseitenfläche 10 kann neben der reflektierenden Oberfläche 18 einen Rahmen 17 umfassen, welcher die reflektierende Oberfläche 18 umschließt. Die reflektierende Oberfläche 18 kann durch einen Spiegel oder ein anderes Material mit einem hohen Reflexionskoeffizienten gebildet werden.

Die reflektierende Oberfläche 18 kann mit dem Rahmen 17 in einer lösbaren Verbindung 19 stehen. Durch die lösbare Verbindung 19 kann die reflektierende Oberfläche 18 vom Rahmen 17 gelöst werden und durch eine andere reflektierende Oberfläche 18 ersetzt werden. Die lösbare Verbindung 19 kann durch Schrauben realisiert werden, die in der Nähe der Ecken der reflektierenden Oberfläche 18 befestigt sind.

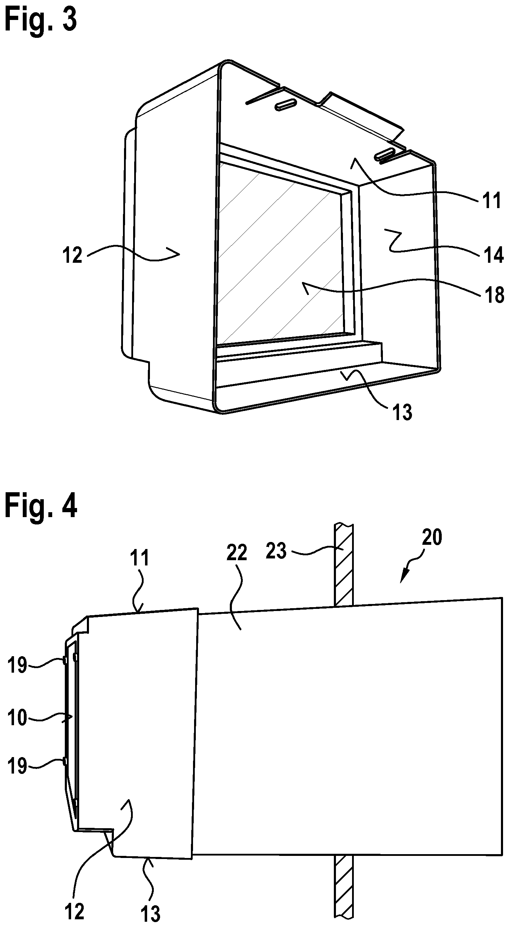

Durch den Aufsatz 1 kann ein Scheinwerfereinstellgerät 20 zu einer Einstellvorrichtung zur Ausrichtung oder Justage des Scheinwerfereinstellgerätes 20 umfunktioniert werden. Hierzu wird der Aufsatz 1 auf einen Lichtsammelkasten 22 eines Scheinwerfereinstellgerätes 20 gesteckt. (siehe Figur 4)

In Figur 4 ist eine Einstellvorrichtung zur Ausrichtung eines Scheinwerfereinstellgerätes 20 dargestellt, bei der der Aufsatz 1 bereits auf das Scheinwerfereinstellgerät 20, welches sich an einem Tragegestell 23 befindet, aufgesteckt ist.

Das Scheinwerfereinstellgerät 20 weist einen fast quaderförmigen Lichtsammelkasten 22 auf, welcher eine einem Fahrzeug 2 zugewandte Lichtsammelfläche hat. Die Lichtsammelfläche des Scheinwerfereinstellgerätes 20 muss exakt zur Fahrachse des Fahrzeuges 2 ausgerichtet werden, um die Scheinwerfer des Fahrzeuges 2 möglichst genau justieren zu können.

Das Gehäuse des Lichtsammelkastens 22 wird durch die zweite, dritte, vierte und fünfte Hauptseitenfläche 11, 12, 13, 14, die einen rechtwinkligen Querschnitt bilden, zumindest teilweise umschlossen. Die erste Hauptseitenfläche 10 steht dabei in Verbindung mit einer Lichtsammelfläche des Lichtsammelkastens 22 oder ist parallel zur Lichtsammelfläche ausgerichtet, so dass die reflektierende Fläche 18 parallel zur der Lichtsammelfläche des Lichtsammelkastens ausgerichtet ist.

Um eine guten Halt des Aufsatzes auf dem Lichtsammelkasten sicherzustellen, können Bereiche von mindestens zwei Hauptseitenflächen 11, 13 mit dem Lichtsammelkasten 22 formschlüssig sein. Des Weiteren können mindestens zwei gegenüberliegende Hauptseitenflächen 11,13 eine Kraft auf das Gehäuse des Lichtsammelkastens 22 ausüben.

Um sicherzustellen dass die erste Hauptseitenfläche 10 bzw. die reflektierende Fläche 18 parallel zur Lichtsammelfläche ausgerichtet sind, weist der Rahmen 17 mindestens eine Sichtöffnung 16 auf. Durch die Sichtöffnung 16 lässt sich der korrekte Sitz des Aufsatzes 1 auf den Lichtsammelkasten 22 überprüfen Eine Einstellvorrichtung zum Justieren eines an einem Fahrzeug montierten Scheinwerfers und das zugehörige Verfahren wurde in der EP 1 016 873 A2 bereits beschrieben und sollen hier im Wesentlichen nochmal erläutert werden.

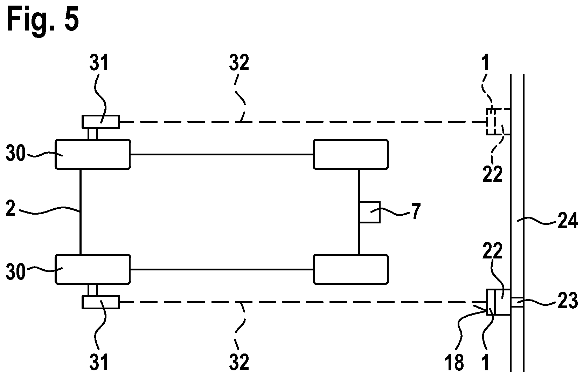

In Fig. 5 ist ein Fahrzeug 2 mit einem Scheinwerfer 7 schematisch dargestellt. Der Scheinwerfer 7 wird mit Hilfe eines z. B. im Bereich zwischen einem und zwei Metern vor dem Fahrzeug 2 senkrecht angeordneten Reflektor 18 justiert, wozu der Reflektor 18 zuvor senkrecht zur Fahrachse des Fahrzeuges 2 ausgerichtet wird. Zur Ausrichtung sind an den Rädern 30 der ungelenkten Achse, vorliegend der Hinterachse, auf der Außenseite der Räder 30 Projektoren einer Lichtprojektionseinrichtung 31 zur Abgabe eines Lichtstrahls 32 an den Rädern 30 oder den Radaufnahmen mit an sich bekannten Befestigungsmitteln angebracht, während der Reflektor 18 zur Bestimmung der Einzelspuren der beiden Räder 30 in den Strahlengang des nach vorne gerichteten Lichtstrahls 32 gebracht wird.

Der Reflektor 18 kann entlang eines Führungsmittels 24 in unterschiedliche Positionen vor den beiden Lichtprojektionseinrichtungen 31 sowie in einer Position vor dem Scheinwerfer 7 zu dessen Justierung gebracht werden. Der Reflektor 18 ist an einem Tragegestell 23 eines Einstellgerätes in horizontaler Richtung um eine Schwenkachse auch bei geringfügig (z. B. 10 einige Grade) schräg eingefahrenen Fahrzeug soweit in beiden Richtungen verschwenkbar, dass der auf ihn auftreffende Lichtstrahl 32 in seiner Einfallsrichtung zurückgeworfen wird, d. h. in horizontaler Richtung senkrecht zu dem Lichtstrahl 32 ausgerichtet ist.

Zur genauen Ausrichtung ist an der Lichtprojektionseinrichtung 31 eine durch den Lichtaustrittspunkt verlaufende Markierung vorgesehen, mit der der zurückgeworfene Lichtstrahl 32 zur Deckung gebracht wird. Da der Lichtstrahl 32 in Richtung der Einzelspur zeigt, ist der Reflektor 18 in horizontaler Richtung senkrecht zu der betreffenden Einzelspur ausgerichtet. Zum Verschieben des Reflektors 18 ist das Tragegestell 23 an einem Führungsmittel 24, das z. B. in einer auf dem Boden des Prüfplatzes montierten Führungsschiene besteht oder an der Decke des Prüfplatzes angebracht ist und quer zu der Längsachse des Fahrzeuges 2 verläuft, geradlinig verstellbar.

Das Fahrzeug 2 wird im Wesentlichen senkrecht zu dem Führungsmittel 24 auf den Prüfplatz eingefahren. Die Ermittlung der Fahrachse des Fahrzeugs 2 erfolgt mit Hilfe von Lichtprojektionseinrichtungen 31, die an den beiden Rädern 30 der ungelenkten Radachse angebracht sind. Eine reflektierende Oberfläche 18 wird senkrecht auf einen Lichtstrahl 32 der Lichtprojektionseinrichtung 31 eingestellt, um die der Richtung des Lichtstrahls 32 entsprechende jeweilige Einzelspur zu bestimmen. Die Fahrachse ist dabei einfach als Mittelwert der den beiden Einzelspuren entsprechenden Schwenkwinkel der reflektierenden Oberfläche 18 z. B. "von Hand" oder automatisch bestimmbar.

Gemäß der vorliegenden Erfindung wird der Lichtsammelkasten 22 des Scheinwerfereinstellgerätes 20 durch den Aufsatz 1 zu einer Einstellvorrichtung zur Ausrichtung eines Scheinwerfereinstellgerätes 20 umfunktioniert, um eine Justierung des Scheinwerfereinstellgerätes 20 vorzunehmen.

Die Lichtsammelfläche des Lichtsammelkastens 22 sollte senkrecht zur Fahrachse des Fahrzeuges 2 ausgerichtet werden. Dies erfolgt indem der Aufsatz 1 auf den Lichtsammelkasten 22 gesteckt wird und die reflektierende Oberfläche 18 senkrecht zum Lichtstrahl 32 ausgerichtet wird, um den jeweiligen Schwenkwinkel zu bestimmen. Die Fahrachse lässt sich durch den Mittelwert der beiden den Einzelspuren entsprechenden Schwenkwinkel bestimmen. Durch eine Einstellung der reflektierenden Fläche 18, welche der Lichtsammelfläche des Scheinwerfereinstellgerätes 22 entspricht, kann der Lichtsammelkasten 20 senkrecht zur Fahrachse ausgerichtet werden und nachfolgend eine Justierung des Scheinwerfers 7 vorgenommen werden

Die Lichtprojektionseinrichtung 31 weist meist einen Laserprojektor auf. Des Weiteren ist an der Lichtprojektionsvorrichtung eine Markierung angeordnet, mit der ablesbar ist, ob der Lichtstrahl 32 in seiner Einfallsrichtung auf die reflektierende Fläche 18 von dieser zurückgeworfen wird, wird die senkrechte Ausrichtung des Reflektors bezüglich des von der Lichtprojektionseinrichtung abgegebenen Lichtstrahls einstellbar. Die Markierung kann z. B. eine vertikale Linie auf der Lichtprojektionseinrichtung 31 sein. Fällt nun der von der reflektierenden Fläche 18 zurück geworfene Lichtstrahl 32 auf diese Linie, so ist die reflektierende Fläche 18 senkrecht zu dem ankommenden Lichtstrahl 18 und damit zur entsprechenden Einzelspur ausgerichtet.

Zum einfachen Ablesen und Einstellen der Schwenkwinkel bzw. der damit verbundenen Einzelspuren und der Fahrachse sind weiterhin die Maßnahmen geeignet, dass eine Skala an dem Tragegestell 23 angebracht ist und der Lichtsammelkasten 22 einen mechanischen oder optischen Zeiger aufweist oder dass der Lichtsammelkasten elektronisch mit einem geeigneten Geber und mit digitaler Anzeige ausgebildet ist. Außer "von Hand" kann zur Ermittlung der Fahrachse vorgesehen sein, dass der der Fahrachse entsprechende Schwenkwinkel des Reflektors aus den Schwenkwinkeln der beiden Spurrichtungen automatisch bestimmt wird.

## Patentansprüche

1. Verfahren zur Ausrichtung eines Scheinwerfereinstellgerätes (20) mit einem Lichtsammelkasten (22), welcher an einem bewegbaren Tragegestell (23) befestigt ist,
wobei zum Ermitteln der Fahrachse eines Fahrzeuges (2) ein Lichtstrahl (32) einer an den beiden gegenüberliegenden ungelenkten Rädern des Fahrzeuges (2) befestigten Lichtprojektionseinrichtung (31) auf einen Reflektor trifft,
wobei der Reflektor durch einen Schwenkwinkel senkrecht zum Lichtstrahl (32) ausgerichtet wird, und
wobei eine Fahrachse des Fahrzeuges (2) anhand eines Mittelwertes der Schwenkwinkel bestimmt wird,
**dadurch gekennzeichnet, dass** der Reflektor durch einen Aufsatz (1) gebildet wird, der an dem Lichtsammelkasten (22) des Scheinwerfereinstellgerätes (20) befestigt ist und fünf rechtwinklig zueinander angeordnete Hauptseitenflächen (10, 11, 12, 13, 14) aufweist, welche an den Kanten so miteinander verbunden sind, dass sie eine Schale bilden, die an einer Seite eine Öffnung aufweist, wobei eine erste Hauptseitenfläche (10) sich gegenüber der Öffnung befindet und eine reflektierende Oberfläche (18) aufweist.

2. Verfahren nach Anspruch 1, wobei die erste Hauptseitenfläche (10) einen Rahmen (17) umfasst, welcher die reflektierende Oberfläche (18) umschließt.

3. Verfahren nach einem der vorherigen Ansprüche, **dadurch gekennzeichnet, dass** die reflektierende Oberfläche (18) ein Spiegel ist.

4. Verfahren nach einem der vorherigen Ansprüche, **dadurch gekennzeichnet, dass** der Aufsatz (1) auf das Gehäuse des Lichtsammelkastens (22) aufsteckbar ist, so dass das Gehäuse des Lichtsammelkastens (22) durch die zweite, dritte, vierte und fünfte Hauptseitenfläche (11, 12, 13, 14), die einen rechtwinkligen Querschnitt bilden, zumindest teilweise umschlossen und die reflektierende Fläche (18) parallel zur einer Lichtsammeifläche des Lichtsammelkastens (22) ausgerichtet ist.

5. Verfahren nach Anspruch 4, **dadurch gekennzeichnet, dass** Bereiche von mindestens zwei Hauptseitenflächen (11, 13) mit dem Lichtsammelkasten (22) formschlüssig sind.

6. Verfahren nach einem der Ansprüche 2 bis 5, **dadurch gekennzeichnet, dass** die reflektierende Oberfläche (18) mit den Rahmen (17) durch eine lösbare Verbindung (19), insbesondere durch Schrauben, verbunden ist.

7. Verfahren nach einem der vorherigen Ansprüche, **dadurch gekennzeichnet, dass** mindestens zwei gegenüberliegende Hauptseitenflächen (11,13) eine Kraft auf das Gehäuse des Lichtsammelkasten (22) ausüben.

8. Verfahren nach einem der Ansprüche 2 bis 7, **dadurch gekennzeichnet, dass** der Rahmen (17) mindestens eine Sichtöffnung (16) aufweist.

## Claims

1. A method for aligning a headlight adjustment device (20) comprising a light collecting box (22) which is fastened to a movable supporting frame (23), wherein, for determining the driving axis of a vehicle (2), a light beam (32) of a light projection device (31) attached to the two opposite, non-steered wheels of the vehicle (2) impinges on a reflector,
wherein the reflector is aligned by a pivot angle perpendicular to the light beam (32), and
wherein a driving axis of the vehicle (2) is determined on the basis of an average value of the pivot angle,
**characterized in that** the reflector is formed by an attachment (1) which is attached to the light collecting box (22) of the headlight adjustment device (20) and comprises five main side surfaces (10, 11, 12, 13, 14) which are arranged at right angles to each another and are connected to each other at the edges so as to form a receptacle having an opening on one side, wherein a first main side surface (10) is located opposite said opening and comprises a reflecting surface (18).

2. The method according to claim 1,
wherein the first main side surface (10) comprises a frame (17) which encloses the reflecting surface (18).

3. The method according to any of the preceding claims,
**characterized in that** the reflecting surface (18) is a mirror.

4. The method according to any of the preceding claims,
**characterized in that** the attachment (1) can be plugged onto the housing of the light collecting box (22) so that the housing of the light collecting box (22) is at least partially enclosed by the second, third, fourth and fifth main side surface (11, 12, 13, 14), which form a rectangular cross section, and the reflecting surface (18) is aligned parallel to a light collecting surface of the light collecting box (22).

5. The method according to claim 4,
**characterized in that** areas of at least two main side surfaces (11, 13) are form-fitting with the light collecting box (22).

6. The method according to any of claims 2 to 5,
**characterized in that** the reflecting surface (18) is connected to the frame (17) by a releasable connection (19), in particular by screws.

7. The method according to any of the preceding claims,
**characterized in that** at least two opposite main side surfaces (11, 13) apply a force on the housing of the light collecting box (22).

8. The method according to any of claims 2 to 7,
**characterized in that** the frame (17) has at least one viewing opening (16).

## Revendications

1. Procédé pour orienter un appareil de réglage de phare (20) présentant un boîtier collecteur de lumière (22), qui est fixé à un châssis porteur mobile (23),
dans lequel, pour déterminer l'axe de déplacement d'un véhicule (2), un rayon lumineux (32) issu d'un dispositif de projection lumineuse (31) fixé aux deux roues non guidées se faisant face du véhicule (2) atteint un réflecteur,
dans lequel le réflecteur est orienté perpendiculairement au rayon lumineux (32) via un angle de pivotement, et
dans lequel un axe de déplacement du véhicule (2) est déterminé à partir d'une valeur moyenne des angles de pivotement,
**caractérisé en ce que** le réflecteur est constitué d'une garniture (1) qui est fixée au boîtier collecteur de lumière (22) de l'appareil de réglage de phare (20) et présente cinq faces latérales principales (10, 11, 12, 13, 14) agencées à angle droit les unes par rapport aux autres, qui sont reliées au niveau des arêtes de telle sorte qu'elles forment une coupe qui présente une ouverture d'un côté, sachant qu'une première face latérale principale (10) se trouve en face de l'ouverture et présente une surface réfléchissante (18).

2. Procédé selon la revendication 1, dans lequel la première face latérale principale (10) comprend un cadre (17) qui entoure la surface réfléchissante (18).

3. Procédé selon l'une quelconque des revendications précédentes, **caractérisé en ce que** la surface réfléchissante (18) est un miroir.

4. Procédé selon l'une quelconque des revendications précédentes, **caractérisé en ce que** la garniture (1) peut être emboîtée sur l'enveloppe du boîtier collecteur de lumière (22) de telle sorte que l'enveloppe du boîtier collecteur de lumière (22) est entourée au moins partiellement par les deuxième, troisième, quatrième et cinquième faces latérales principales (11, 12, 13, 14), qui forment une section transversale rectangulaire, et que la face réfléchissante (18) est orientée parallèlement à une surface collectrice de lumière du boîtier collecteur de lumière (22).

5. Procédé selon la revendication 4, **caractérisé en ce que** des zones d'au moins deux faces latérales principales (11, 13) sont solidaires du boîtier collecteur de lumière (22).

6. Procédé selon l'une quelconque des revendications 2 à 5, **caractérisé en ce que** la surface réfléchissante (18) est reliée au cadre (17) par une jonction amovible (19), en particulier par des vis.

7. Procédé selon l'une quelconque des revendications précédentes, **caractérisé en ce qu'**au moins deux faces latérales principales opposées (11, 13) exercent une force sur l'enveloppe du boîtier collecteur de lumière (22).

8. Procédé selon l'une quelconque des revendications 2 à 7, **caractérisé en ce que** le cadre (17) présente au moins une fenêtre (16).
